# EUROPÄISCHE PATENTSCHRIFT

(11) **EP 2 798 989 B1**
(45) Veröffentlichungstag und Bekanntmachung des Hinweises auf die Patenterteilung: **26.09.2018**
(21) Anmeldenummer: 14166502.6
(22) Anmeldetag: 30.04.2014
(51) Int. Cl.: A47J 31/44

(54) **Getränkezubereitungsvorrichtung mit Mitteln zur Milcherhitzung sowie Betriebsverfahren**
Beverage preparation device with means for milk heating and operating procedure
Dispositif de préparation de boisson, des moyens de chauffage du lait ainsi que le procédé d'opération

(30) Priorität: 30.04.2013 DE 102013104408
(43) Veröffentlichungstag der Anmeldung: 05.11.2014
(73) Patentinhaber: Eugster/Frismag AG, 8580 Amriswil (CH)
(72) Erfinder: Riessbeck, Wolfgang, 8597 Landschlacht (CH); Wäger, Simon, 8530 Amriswil (CH)
(74) Vertreter: Patentanwälte Behrmann Wagner PartG mbB

(56) Entgegenhaltungen:
- EP-A1- 1 707 090
- DE-A1-102008 058 139

## Beschreibung

Die Erfindung betrifft eine Getränkezubereitungsvorrichtung gemäß dem Oberbegriff des Anspruchs 1, insbesondere in Form einer eine Brüheinheit umfassenden Kaffeemaschine, mit Mitteln zum Erhitzen von Milch mittels Wasserdampf, umfassend eine Heizeinrichtung zum Erhitzen von Wasser zur Bildung von Wasserdampf, mit einer über eine Treibdampfleitung mit dampfförmigem oder zur Dampferzeugung vorgesehenem Fluid versorgbare Treibdüse zum Erzeugen von Unterdruck und dadurch Ansaugen von Milch durch eine Milchleitung, wobei Wasserdampf zum Erhitzen der Milch durch eine Auslassöffnung der Treibdüse in die angesaugte Milch einleitbar ist. Ferner betrifft die Erfindung ein Verfahren zum Betreiben einer Getränkezubereitungsvorrichtung gemäß dem Oberbegriff des Anspruchs 11.

Bei bekannten Kaffeevollautomaten für den Hausgebrauch sind, insbesondere bei hochpreisigeren Geräten, Mittel zum Erhitzen von Milch mittels Wasserdampf vorgesehen, wobei Wasserdampf durch eine sogenannte Treibdüse geleitet wird, um in der Art einer Strahlpumpe nach dem Venturiprinzip Milch durch eine Milchleitung anzusaugen. Dabei gelangt der Wasserdampf, der zur Erzeugung des Ansaug-, d.h. Unterdruckes genutzt wird in die Milch und erhitzt diese. In der Praxis reicht die über den Dampf zugeführte Energiemenge jedoch bei gegebener Flussgeschwindigkeit lediglich dazu aus, die Milch auf etwa 40°C zu erhitzen, welches von einigen Verbrauchern für bestimmte Kaffeeprodukte, wie beispielsweise Cappuccino oder Latte Macchiato als eine zu geringe Temperatur empfunden wird, da der Milchanteil bei derartigen Getränken vergleichsweise hoch und in der Folge die resultierende Mischtemperatur mit Kaffee bei nur 40°C warmer Milch zu gering ist.

Aus der DE 602 05 290 T2 ist eine Vorrichtung zur Abgabe von Milchschaum oder erhitzter Milch bekannt, wobei mittels eines Dampferzeugers Dampf erzeugt wird, der ausschließlich alternativ über eine Dampfleitung zu einer in eine Aufschäumkammer mündende Düse oder einer davon beabstandeten separaten Düse dem Milchstrom zugeleitet werden kann. Zwischen den unterschiedlichen Dampfzuleitungen kann über einen drehbaren manuellen Wählknopf ausgewählt werden, wird die Einstellung zur Versorgung der in die Aufschäumkammer mündenden Düse mit Wasserdampf gewählt, kann mit der bekannten Vorrichtung Milchschaum erzeugt werden. Wird der Dampfversorgungsweg über die alternative Düse gewählt, wird nicht verschäumte Milch mittels des Dampfes erhitzt.

Aus der EP 1 312 292 A1 ist eine Anordnung zur Erzeugung von Milchschaum und zum Erhitzen von Milch bekannt. Die bekannte Vorrichtung weist zwei Wasserdampfkanäle auf, die vor einer Position, an der der Wasserdampf der Milch zugeführt wird zusammengeführt werden. Mit anderen Worten erfolgt die Wasserdampfzuleitung in die Milch an einer einzigen Position.

Zum weiteren Stand der Technik wird auf die DE 10 2010 007 143 A1 verwiesen. Diese Druckschrift der Anmelderin beschreibt eine Kaffeemaschine mit einer einzigen Dampfzuleitung, die über ein zentrales Ventil versorgt wird, über welches auch eine in den Milchstrom mündende Luftleitung mit Luft versorgt wird.

Ausgehend von dem zuvor beschriebenen Stand der Technik liegt der Erfindung die Aufgabe zugrunde, eine gattungsgemäße Getränkezubereitungsvorrichtung, insbesondere eine eine Brüheinheit zum Auslaugen von Kaffeemehl umfassende Kaffeemaschine so weiter zu bilden, dass mit dieser die Milchtemperatur auf ein höheres Temperaturniveau, insbesondere von über 50°C erhitzt werden kann, bevorzugt ohne eine größere oder eine zusätzliche Heizeinrichtung zum Erhitzen der Milch vorsehen zu müssen und bevorzugt ohne eine erhebliche Milchflussgeschwindigkeit hinnehmen zu müssen. Ferner besteht die Aufgabe darin, ein entsprechend verbessertes Verfahren zum Betreiben einer Getränkevorrichtung anzugeben, mit welcher höhere Milchtemperaturen als bisher erzeugt werden können.

Diese Aufgabe wird hinsichtlich der Getränkezubereitungsvorrichtung mit den Merkmalen des Anspruchs 1 und hinsichtlich des Verfahrens mit den Merkmalen des Anspruchs 11 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Zur Vermeidung von Wiederholungen sollen vorrichtungsgemäß offenbarte Merkmale als verfahrensgemäß offenbart gelten und beanspruchbar sein. Ebenso sollen verfahrensgemäß offenbarte Merkmale als vorrichtungsgemäß offenbart gelten und beanspruchbar sein.

Der Erfindung liegt der Gedanke zugrunde, die Milchtemperatur dadurch auf ein höheres Temperaturniveau zu bringen, dass Wasserdampf nicht nur durch die, insbesondere einzige, Auslassöffnung der Treibdüse hindurch in die Milch eingespeist wird, sondern gleichzeitig an mindestens einer weiteren Position in Strömungsrichtung der Milch vor oder nach dieser Auslassöffnung der Treibdüse.

Durch die Zuleitung von Wasserdampf in die Milch an mindestens zwei, insbesondere in Strömungsrichtung der Milch beabstandeten Positionen kann die Milchtemperatur überraschend deutlich erhöht werden, insbesondere auf Temperaturen von über 50°C, ganz besonders bevorzugt über 55°C, noch weiter bevorzugt über 60°C und ganz besonders bevorzugt auf eine Temperatur aus einem Temperaturbereich zwischen etwa 58°C und 75°C.

Bei einer erfindungsgemäßen Getränkezubereitungsvorrichtung muss also zu diesem Zweck zusätzlich zu der die Auslassöffnung der Treibdüse mit Wasserdampf versorgenden Treibleitung mindestens eine zusätzliche Dampfleitung vorgesehen werden, über die Wasserdampf der Milch zugeführt werden kann. Im einfachsten Fall könnte dies dadurch realisiert werden, dass die Treibdüse zwei Auslassöffnungen für Dampf aufweist, wobei in diesem Fall die zusätzliche Dampfleitung von einem Abschnitt der Treibdüse gebildet wäre. Bevorzugt ist jedoch eine Ausführungsform, bei welcher die mindestens eines zusätzliche Dampfleitung benachbart, vorzugsweise mit Abstand zu der Treibdüse angeordnet ist und benachbart zu dieser, insbesondere beabstandet von dieser ausmündet, insbesondere in Strömungsrichtung vor oder nach der, insbesondere einzigen, Auslassöffnung der Treibdüse. Wie erwähnt, ist es grundsätzlich möglich mehr als eine zusätzliche Dampfleitung vorzusehen, um dann der Milch Wasserdampf an mehr als zwei unterschiedlichen Positionen zuzuführen, wobei die Zuführung von Wasserdampf in Strömungsrichtung der Milch vor und/oder nach der, insbesondere einzigen, Auslassöffnung der Treibdüse möglich ist. Bevorzugt weist die zusätzliche Dampfleitung eine Drossel (Verengungsstelle) auf, an welcher über die Siedetemperatur bei Atmosphärendruck erhitztes Fluid zu Wasserdampf entspannen kann.

Im Rahmen der Anmeldung werden die Begriffe Treibdampfleitung und zusätzliche Dampfleitung so verstanden, dass über diese, insbesondere gleichzeitig, dampfförmiges oder zur Dampferzeugung vorgesehenes Fluid gefördert wird. Dies bedeutet, dass das Fluid bei einer möglichen Ausführungsform innerhalb der Treibdampfleitung aufgrund eines Überdrucks (noch) nicht dampfförmig sein muss, sondern lediglich eine Temperatur aufweisen muss, insbesondere von über 100°C, die gewährleistet, dass aus dem erhitzten Fluid nach einer entsprechenden Entspannung, insbesondere an einer Drossel, Wasserdampf entsteht. Bevorzugt wird zumindest abschnittsweise durch die Treibdampfleitung und/oder mindestens eine zusätzliche Leitung unmittelbar Wasserdampf transportiert.

Wie später noch erläutert werden wird, ist es besonders bevorzugt, wenn der Auslassöffnung der Treibdüse eine Kammer nachgeordnet ist, in welche die durch die Milchleitung angesaugte Milch mit dem durch die Auslassöffnung der Treibdüse ausströmenden Wasserdampf vermischt wird. Diese Kammer dient in Weiterbildung der Erfindung in einem von einem Milcherhitzungsbetriebszustand unterschiedlichen Aufschäumbetriebszustand zur Aufschäumung der Milch. Während dieses Aufschäumbetriebszustandes wird der Milch, insbesondere im Gegensatz zu dem reinen Milcherhitzungsbetriebszustand keine Luft über eine möglicherweise vorgesehene Luftzuleitung zugeführt. Die Kammer hat bevorzugt einen Innendurchmesser der einem mehrfachen Innendurchmesser der Milchleitung entspricht.

Besonders bevorzugt handelt es sich bei der erfindungsgemäßen Getränkezubereitungsvorrichtung um eine Getränkezubereitungsvorrichtung für den Hausgebrauch, die üblicherweise keine Mittel, insbesondere Proportionalventile oder Stößeleinrichtungen od.dgl. Verstellmechanismus zur stufenlosen oder gestuften Einstellung des Dampfvolumenstroms aufweist

Ganz besonders bevorzugt ist eine Ausführungsvariante der Getränkezubereitungsvorrichtung, bei welcher der Heizeinrichtung Aufteilmittel, insbesondere umfassend eine Dampfleitungsverzweigung (z.B. eine, bevorzugt über ein manuell oder motorisch antreibbares Ventil öffnenbare oder verschließbare Verbindungsleitung bzw. Verzweigungsleitung zwischen der Treibdampfleitung oder einer vorgeordneten gemeinsamen Fluidleitung und der zusätzlichen Dampfleitung) vorgesehen sind, mit welchen das von der Heizeinrichtung bereitgestellte Fluid (Wasserdampf oder über den Siedepunkt bei Atmosphärendruck erhitztes Wasser) aufteilbar ist auf die Treibdampfleitung und die mindestens eine zusätzliche Dampfleitung. Mit anderen Worten ist weiterbildungsgemäß vorgesehen, Wasserdampf, der an mindestens zwei unterschiedlichen Positionen der Milch gleichzeitig zugeführt wird, mit einer einzigen Heizeinrichtung zu erzeugen, wodurch auf zusätzliche Heizeinrichtungen zur Erzeugung von Wasserdampf mit dem Ziel der Milcherhitzung verzichtet werden kann. Überraschenderweise kann durch die Aufteilung des Fluids die von der Heizeinrichtung zur Verfügung gestellte bzw. stellbare Wärmeenergiemenge besser ausgenutzt werden, als dies im Stand der Technik möglich ist. Auf diese Weise kann bei gleich groß wie bisher dimensionierten Heizeinrichtungen durch das Vorsehen der Möglichkeit der Einspeisung von Wasserdampf an einer weiteren bzw. zusätzlichen Position eine im Vergleich zur bisherigen Praxis deutlich erhöhte Milchtemperatur erzielt werden. Dabei wird überraschend die Geschwindigkeit, mit welcher die Milch gefördert wird im Vergleich zu einer Ausführung mit einer Wasserdampfzuleitung an der Treibdüse offensichtlich nur geringförmig bis gar nicht reduziert. Daher hat die weiterbildungsgemäße Lösung Vorteile gegen eine denkbarer Variante, bei welcher eine Temperaturerhöhung dadurch erzielt wird, dass künstlich die Milchgeschwindigkeit, mit der die Milch relativ zur Treibdüse strömt, herabgesetzt wird, um die Dampfmenge und damit den Energieeintrag pro Milchvolumeneinheit zu erhöhen.

Ganz besonders vorteilhaft hat es sich herausgestellt, mindestens eine zusätzliche Dampfleitung in die Milchleitung in Strömungsrichtung der Milch vor der Auslassöffnung der Treibdüse einmünden zu lassen. Konstruktiv besonders bevorzugt ist dabei eine Variante, bei welcher die zusätzliche Dampfleitung in einem (fakultativen) Aufschäumbetriebszustand der Getränkezubereitungsvorrichtung, in welchem in der (fakultativen) der Auslassöffnung der Treibdüse nachgeordneten Kammer Milch zu Milchschaum aufschäumbar ist, eine Luftleitung ist, durch die während des Aufschäumbetriebszustandes der Milch vor dem Eintreffen in die Kammer Luft zugeleitet wird. Besonders zweckmäßig ist es dabei, wenn diese Luftleitung eine Drossel beinhaltet.

Von ganz besonderem Vorteil ist es, wenn die Dampfleitung neben der Luftleitungsfunktion in einem Aufschäumbetriebszustand noch die Funktion einer Reinigungsleitung erfüllt, durch die hindurch während eines Reinigungsbetriebszustandes Heißwasser und/oder Wasserdampf gefördert wird, um die Milchleitung von Anhaftungen zu befreien.

Zusätzlich oder alternativ zu einer Einleitung von Wasserdampf in die Milchleitung ist es denkbar eine zusätzlich Dampfleitung in eine der Auslassöffnung der Treibdüse nachgeodnete (auch fakultative) Kammer einmünden zu lassen und auf diese Weise der Milch beabstandet zur Auslassöffnung der Treibdüse Wasserdampf zuzuführen.

Zusätzlich oder alternativ zu den zuvor beschriebenen Einleitpositionen für Wasserdampf ist es möglich eine zusätzliche Dampfleitung in eine Auslassleitung für erhitzte Milch einmünden zu lassen, durch die Milch einem Milchauslass der Getränkezubereitungsvorrichtung zuführbar ist, wobei die Auslassleitung bevorzugt einer der Auslassöffnung oder Treibdüse nachgeordneten (fakultativen) Kammer, insbesondere Aufschäumkammer nachgeordnet ist.

Besonders zweckmäßig ist eine Ausführungsform der Getränkezubereitungsvorrichtung, bei welcher der Heizeinrichtung ein, bevorzugt keramisches, insbesondere elektromotorisch, ansteuerbares Mehrwegeventil nachgeordnet ist, durch welches das von der Heizeinrichtung bereitgestellte Fluid zumindest einer Funktionseinheit, insbesondere zu den Milcherhitzungsmitteln, noch weiter bevorzugt zu der Treibdüse strömen kann. Dabei ist es weiter bevorzugt, wenn das Mehrwegeventil derart angeschlossen ist, dass mit diesem die Versorgung einer Funktionseinheit der Getränkezubereitungsvorrichtung in einem von einem Milcherhitzungsbetriebszustand unterschiedlichen Betriebszustand mit Luft, insbesondere zur Milchaufschäumung und/oder mit Reinigungswasser und/oder mit Reinigungswasserdampf (Reinigungsbetriebsmodus) steuerbar ist. Gemäß einer besonders bevorzugten Ausführungsform ist vorgenanntes Mehrwegeventil derart ausgebildet, dass mit diesem der von der Heizeinrichtung bereitgestellte Fluidstrom aufteilbar ist zum einen auf die zur Treibdüse führende Treibdampfleitung und zum anderen auf mindestens eine zusätzliche Dampfleitung, durch die Wasserdampf an der von der Auslassöffnung der Treibdüse unterschiedlichen Position der Milch zuführbar ist. Bei einer alternativen Ausführungsform kann, wie unten erläutert, zur Aufteilung dieses Fluids ein von dem Mehrwegeventil separates Ventil vorgesehen sein.

Besonders bevorzugt ist es, wenn Ventilmittel der Aufteilmittel, welche ggf. das zuvor erläuterte Mehrwegeventil und/oder mindestens ein zusätzliches (von einem Mehrwegeventil separates) oder alternatives Ventil umfassen können, derart manuell oder automatisch betätigbar sind, dass während des Milcherhitzungsvorgangs in einer ersten Phase Wasserdampf ausschließlich über die Treibdampfleitung und damit über die Auslassöffnung der Treibdüse der Milch zugeführt wird und in einer auf diese erste Phase nachfolgenden zweiten Phase zusätzlich Wasserdampf über die mindestens eine zusätzliche Dampfleitung der Milch zugeleitet wird. Bei einer alternativen Ausführungsvariante, bei welcher Mittel zur stufenlosen oder gestuften Einstellung eines Dampfvolumenstroms vorgesehen sind, insbesondere in Form mindestens eines Proportionalventils (auf die bzw. das bevorzugt verzichtet wird) ist es möglich in der ersten Phase Dampf über die Treibdampfleitung und gleichzeitig über die mindestens eine zusätzliche Dampfleitung der Milch zuzuleiten und in der zweiten auf die erste Phase folgenden Phase der Dampfvolumenstrom, der durch die zusätzliche Dampfleitung zugeführt wird im Vergleich zur ersten Phase erhöht wird.

Durch vorstehende Maßnahmen soll sichergestellt werden, dass die Treibdüse mit ausreichend Wasserdampf versorgt wird um einen ausreichenden Unterdruck erzeugen zu können, um hiermit ein störungsfreies Anlaufen des Ansaugvorgangs sicherzustellen. Nachdem dann die Milch strömt kann zusätzlich Dampf über die mindestens eine zusätzliche Dampfleitung dem Milchstrom zugeführt werden oder gemäß der alternativen Ausführungsform der Dampfvolumenstrom durch die zusätzliche Dampfleitung erhöht werden.

Wie eingangs erwähnt ist es besonders bevorzugt, insbesondere aus Kostengründen und zur Vereinfachung der Konstruktion auf Mittel zum stufenlosen Einstellen des Fluidvolumenstroms des von der Heizeinrichtung zur Verfügung gestellten dampfförmigen oder zur Dampferzeugung vorgesehenen Fluids zu verzichten. In diesem Fall ist es dann nur möglich eine Dampfleitung mit Hilfe von Ventilmitteln zu öffnen oder zu schließen, d.h. es gibt nur zwei Ventilzustände - offen, geschlossen.

Die Erfindung führt auch auf ein Verfahren zum Betreiben einer Getränkezubereitungsvorrichtung, insbesondere zum Betreiben einer Kaffeemaschine, insbesondere eines Kaffeevollautomaten, wobei die Kaffeemaschine dann eine Brüheinheit zum Auslaugen von Kaffeemehl umfasst. Bevorzugt handelt es sich bei der nach dem erfindungsgemäßen Verfahren betriebenen Vorrichtung um eine nach dem Konzept der Erfindung ausgebildete Getränkezubereitungsvorrichtung. Erfindungsgemäß wird Wasserdampf an mindestens zwei unterschiedlichen Positionen der Milch zugeführt, wobei es besonders bevorzugt ist, wenn der gesamte, der in die Milch eingeleitete Wasserdampf von einer Heizeinrichtung stammt und lediglich entsprechend aufgeteilt wird. Wesentlich ist, dass eine Position, durch die Wasserdampf der Milch zugeführt wird, eine Auslassöffnung einer Treibdüse ist, mittels derer Milch durch eine Milchleitung nach dem Venturiprinzip angesaugt wird. Die mindestens eine weitere Position, an der der Milch Wasserdampf zugeführt wird, kann sich in Strömungsrichtung der Milch vor und/oder hinter der Auslassöffnung der Treibdüse befinden. Über die Milchleitung kann mittels der Treibdüse nach dem Venturiprinzip Milch aus einem externen Milchgefäß, beispielsweise einer Milchflasche oder eine Milchtüte angesaugt werden oder alternativ aus einem Milchbehälter, welcher fest in die Getränkezubereitungsvorrichtung integriert oder lösbar an dieser anordnenbar sein kann.

Ganz besonders zweckmäßig ist es, wenn zur Gewährleistung eines störungsfreien Anlaufens des Milchflusses aus der Milchleitung während einer ersten Phase eines Milcherhitzungsvorgangs Dampf ausschließlich über die Auslassöffnung der Treibdüse der Milch zugeführt wird und in einer nachfolgenden zweiten Phase zusätzlich an der von der Auslassöffnung unterschiedlichen Position der Milch zugeführt wird. Alternativ ist es möglich während einer ersten Phase Dampf nicht nur durch die Auslassöffnung der Treibdüse der Milch zuzuführen, sondern gleichzeitig an mindestens einer unterschiedlichen Position, wobei dann bevorzugt während der zweiten Phase der Dampfvolumenstrom des Wasserdampfes, der an der von der Auslassöffnung unterschiedlichen Position der Milch zugeführt wird, im Vergleich zur ersten Phase erhöht wird. Dies kann beispielsweise dadurch realisiert werden, dass der freie Leitungsquerschnitt einer zusätzlichen Leitung in der zweiten Phase im Vergleich zu einer ersten Phase, beispielsweise mittels eines Proportionalventils vergrößert wird oder dadurch, dass in der zweiten Phase Wasserdampf durch mehr zusätzliche Dampfleitungen, d.h. an mehr zusätzlichen Positionen der Milch zugeführt wird als in der ersten Phase. Letzte Variante hat den Vorteil, dass die entsprechende Vorrichtung ohne Mittel zum stufenlosen Einstellen oder gestuften Einstellen des Dampfvolumenstroms durch eine Leitung auskommt. D.h., die Ausführungsform ist mit einer Getränkezubereitungsvorrichtung realisierbar, bei welcher die Leitungen bzw. Ventile nur zwischen zwei Zuständen, nämlich geöffnet oder geschlossen verstellt werden können.

Besonders bevorzugt ist es, wenn die Getränkezubereitungsvorrichtung zwischen zwei unterschiedlichen Betriebsmodi verstellbar ist, nämlich einem Normaltemperaturmodus, währenddessen Wasserdampf der Milch ausschließlich über die Auslassöffnung der Treibdüse zugeführt wird und einem Hochtemperaturmodus, währenddessen die Milch erfindungsgemäß an mindestens einer von der Auslassöffnung der Treibdüse unterschiedlichen Position der Milch zugeleitet wird.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: ein Fluidschema einer als Kaffeemaschine ausgebildeten Getränkezubereitungsvorrichtung,
- Fig. 2:: eine Detaildarstellung einer möglichen Ausführungsform von Teilen von Milcherhitzungsmitteln,
- Fig. 3 bis Fig. 6:: schematische Darstellung von unterschiedlichen Ausführungsvarianten der Wasserdampfzuführung,
- Fig. 7:: einen Betriebsmodus Milcherhitzung "Normaltemperatur",
- Fig. 8:: einen Betriebszustand Milcherhitzung erhöhte Temperatur,
- Fig. 9:: einen möglichen Betriebszustand Milchaufschäumung, und
- Fig. 10:: ein von Fig. 1 unterschiedliches Fluidschema einer als Kaffeemaschine ausgebildeten Getränkezubereitungsvorrichtung.

In den Figuren sind gleiche Elemente und Elemente mit der gleichen Funktion mit den gleichen Bezugszeichen gekennzeichnet.

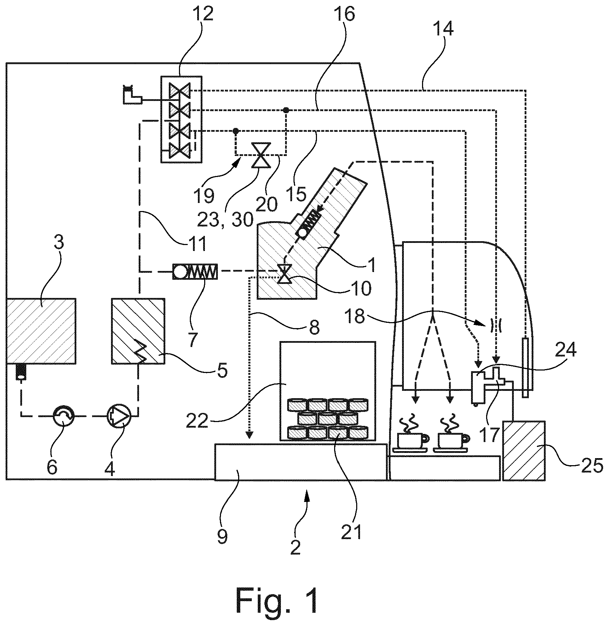

In Fig. 1 ist ein Fluidsystem einer als eine eine Brüheinheit 1 aufweisende Kaffeemaschine, hier ein Kaffeevollautomat ausgebildete Getränkezubereitungsvorrichtung 2 gezeigt. Die Getränkezubereitungsvorrichtung 2 umfasst einen Wassertank 3, aus welchem mittels einer Förderpumpe 4 Wasser zu einer Heizeinrichtung 5 förderbar ist, wobei die Wassermenge mittels eines Durchflussmessers 6 erfasst wird. In Strömungsrichtung des Wassers nach der Heizeinrichtung 5, mit der das Wasser, je nach Bedarf auf eine Brühtemperatur oder alternativ auf über 100°C erhitzbar ist, ist ein Überdruckventil 7 nachgeschaltet, durch welches Wasser zum Brühen von Kaffee in Richtung einer Brüheinheit 1 gefördert wird, in welcher mittels einer nicht dargestellten, insbesondere in die Vorrichtung 2 integrierten Kaffeemühle gemahlenes Kaffeemehl ausgelaugt wird. Ein Drainageventil 10 steuert dabei den Fluidfluss. d.h. durch das Überdruckventil 7 gefördertes Wasser kann alternativ zur Kaffeemehlauslaugung genutzt werden oder in Richtung einer Drainage 8 abgeführt werden, die zu einer Tropfschale 9 führt. Insofern dient das Überdruckventil 7 auch zum Abbau eines unzulässiges Überdrucks im Bereich der Heizeinrichtung 5, in dem dieser Überdruck über das Drainageventil 10 und die Drainage 8 abgeführt werden kann. Ausgelaugtes Kaffeemehl gelangt in Form von Tresterkuchen 21 in einen Tresterbehälter 22.

Eine Fluidleitung 11 führt von der Heizeinrichtung 5 zu einem als Keramikventil ausgebildeten automatisiert betätigbaren Mehrwegeventil, über welches je nach Betriebsmodus eine Heißwasserleitung 14 mit heißem Wasser versorgt werden kann, oder eine Treibdampfleitung 15 alternativ mit Dampf oder mit über 100°C erhitztem Wasser oder eine Leitung 16 mit Luft zum Aufschäumen von Milch.

Die Leitung 16 kann, wie später noch erläutert werden wird, je nach Betriebsmodus also eine Luftleitung sein oder eine zusätzliche Dampfleitung, durch welche Wasserdampf oder alternativ über 100°C erhitztes Wasser zur Generierung von Wasserdampf nach der Entspannung gefördert werden kann. Auch kann die Leitung 16 durch eine entsprechende Ventilstellung des Mehrwegeventils 12 als Reinigungsleitung zum Spülen einer Milchleitung 17 mit Heißwasser oder Dampf genutzt werden. In der Leitung 16 ist eine Drossel 18 vorgesehen.

In dem konkreten Ausführungsbeispiel sind der Heizeinrichtung Aufteilmittel 19 zugeordnet. Diese umfassen eine Abzweig- bzw. Verbindungsleitung 20, mit der der durch die Fluidleitung 11 strömende Wasserdampf oder das über 100°C erhitzte Wasser zur Dampferzeugung aufgeteilt werden kann auf die Treibdampfleitung 15 und die dann als zusätzliche Dampfleitung fungierende Leitung 16.

In der Verbindungsleitung 20 befinden sich zusätzlich zu dem Mehrwegeventil 12 Ventilmittel 23 in Form eines manuell oder alternativ motorisch betätigbaren Ventils 30, über welches die Verbindungsleitung 20 geöffnet oder geschlossen werden kann, um den Wasserdampf bzw. das sehr heiße Wasser aufzuteilen oder ausschließlich über die Treibdampfleitung 15 einer Treibdüse 24 zuzuführen, die nach dem Venturiprinzip arbeitet, und die einen Unterdruck erzeugt, aufgrund dessen Milch über die Milchleitung 17 aus einem Milchbehälter 25 angesaugt wird. Der aus der Treibdüse 24 ausströmende Wasserdampf wird mit der Milch vermischt, die auf diese Weise erhitzt wird und so nach unten ausströmen kann. Auf diese Weise kann die Milch auf etwa 40°C erhitzt werden. Nach einem erfolgreichen Anlaufen des Milchstroms werden die Ventilmittel 23 geöffnet (zweite Phase), so dass das durch die Fluidleitung 11 strömende dampfförmige oder zur Dampferzeugung vorgesehene Fluid aufgeteilt wird auf die Fluidleitung 15 und die zusätzliche Dampfleitung 16, so dass der Milch Wasserdampf an zwei unterschiedlichen Stellen zugeführt wird, nämlich im Bereich des Auslasses der Treibdüse und vorgelagert an der Einmündung der Leitung 16 in die Milchleitung 17. Durch diese Maßnahme können bei einer einzigen Heizeinrichtung 5 zur Wasserdampferzeugung ohne Leistungserhöhung derselben erhöhte Milchtemperaturen von bevorzugt 60°C und mehr erreicht werden.

Die Ventilmittel 23 können bei alternativer Ausgestaltung des Mehrwegeventils 12 aus Teil dieses Mehrwegeventils sein, wobei dann auf das Ventil 30 verzichtet werden kann.

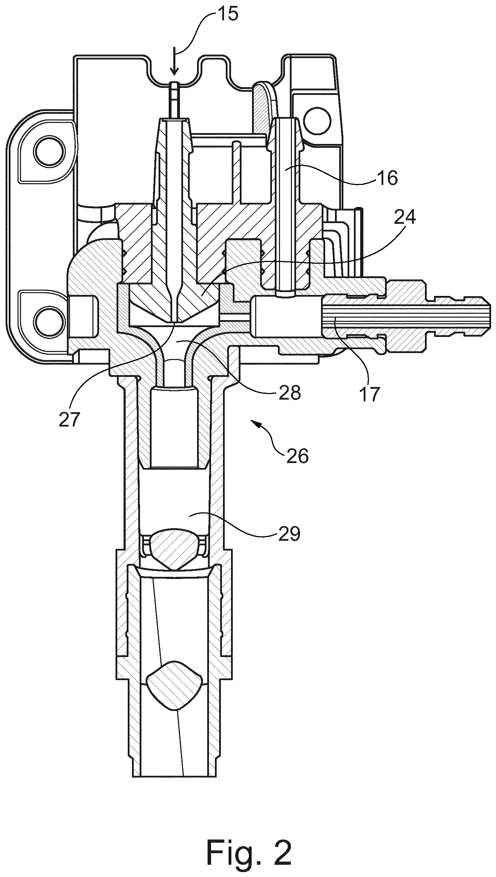

In Fig. 2 ist beispielhaft ein Ausschnitt von Milcherhitzungsmitteln 26 gezeigt. Zu erkennen ist die vorerwähnte Treibdüse 24 in die Wasserdampf oder zur Erzeugung von Wasserdampf vorgesehenes, d.h. entsprechend erhitztes Heißwasser über die Treibdampfleitung 15 zugeführt wird. Wasserdampf tritt an einer Auslassöffnung 27 der nach dem Venturiprinzip arbeitenden Treibdüse aus in eine der Treibdüse 24 nachgeordnete Kammer 28, die in einem Aufschäumbetriebmodus zur Aufschäumung von Milch genutzt wird. Der Kammer 28 ist eine Auslassleitung 29 für erhitzte Milch nachgeordnet.

In die Kammer 28 mündet eine Milchleitung 17, durch welche aus einem nicht dargestellten Milchbehältnis aufgrund des Venturieffektes Milch angesaugt wird, wenn Wasserdampf aus der Auslassöffnung 27 ausströmt. In die Milchleitung 17 mündet die Leitung 16, durch welche in einem Aufschäumbetriebmodus Luft der Milch zugeführt wird und in der Kammer 28 mit Wasserdampf verwirbelt wird, so dass die Milch aufschäumt. Während eines Heißmilchbetriebsmodus strömt durch die dann als zusätzliche Dampfleitung dienende Leitung 16 Wasserdampf in die Milchleitung, und zwar in Fließrichtung der Milch vor der Auslassöffnung 27 der Treibdüse. Zusätzlich oder alternativ kann durch eine Dampfleitung (nicht gezeigt) Dampf in die Kammer 28 eingeleitet werden und/oder in die Auslassleitung 29, jedenfalls an mindestens einer von der Auslassöffnung 27 unterschiedlichen, insbesondere von dieser beabstandeten Position.

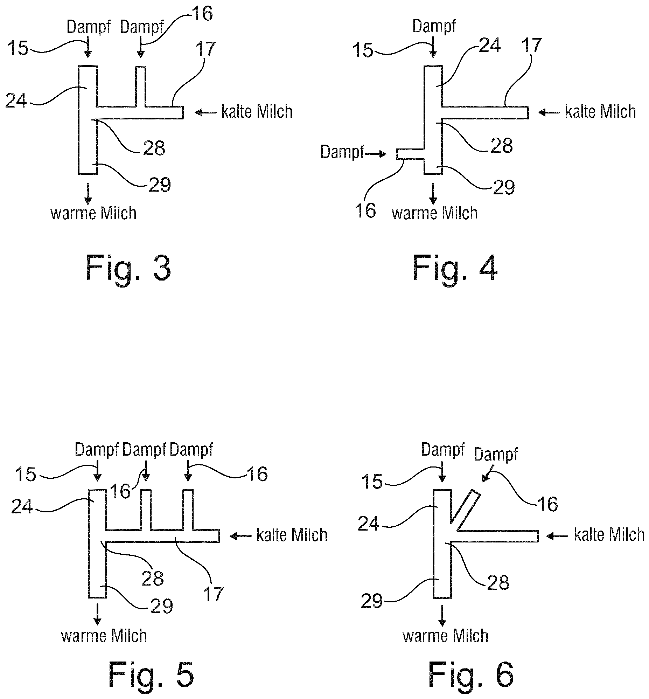

In Fig. 3 ist die Anordnung gemäß Fig. 2 stark schematisiert dargestellt. Gezeigt ist ein Betriebsmodus Heißmilcherzeugung. Wasserdampf wird durch die Treibdampfleitung 15 der Treibdüse 24 zugeleitet und gleichzeitig über die zusätzliche Dampfleitung 16 in die Milchleitung 17 in Strömungsrichtung vor dem Treibdüsenauslass. Kalte Milch wird über die Milchleitung 17 angesaugt und so an zwei unterschiedlichen Stellen erhitzt und kann in diesem stark erhitzten Zustand durch die Auslassleitung 29 ausströmen.

Bei dem Ausführungsbeispiel gemäß Fig. 4 wird wiederum Wasserdampf an zwei unterschiedlichen Stellen zugeführt, und zwar zum einen wieder über die Treibdampfleitung 15 und die Treibdüse 24 und zum anderen über eine zusätzliche Dampfleitung 16, die in die Auslassleitung 19, d.h. in Strömungsrichtung der Milch hinter der Treibdüsenauslassöffnung mündet.

Fig. 5 zeigt ein exemplarisches Beispiel dafür, dass Dampf auch an mehr als zwei Stellen zugeleitet werden kann. Beispielhaft hier über zwei zusätzliche Dampfleitungen 16, die in die Milchleitung 17 einmünden, wobei zumindest eine der zusätzlichen Dampfleitungen auch an anderer Stelle dem Milchstrom zugeführt werden kann.

Fig. 6 zeigt eine alternative Ausführungsform, bei der Wasserdampf über die zusätzliche Dampfleitung 16 in die Kammer 28 eingeleitet wird und gleichzeitig Wasserdampf über die Treibdüse 24 strömt.

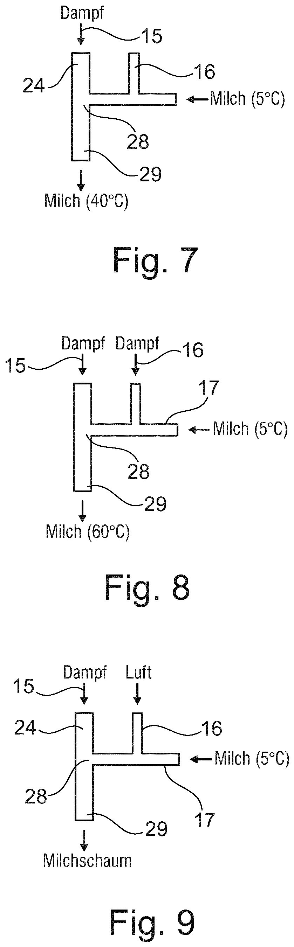

In Fig. 7 ist ein Betriebszustand "Milchnormaltemperaturerhitzung" gezeigt, in welchem Wasserdampf ausschließlich über die Treibdüse 24 der Milch zugeführt wird. Die zusätzliche Leitung 16 bzw. dieser zugeordnete Ventilmittel 23 (vgl. Fig. 1) sind geschlossen. Bei dem dargestellten Fluidschema kann es sich auch um die Darstellung einer ersten Phase der Heißmilcherzeugung handeln, nämlich um eine Anlaufphase, bei welcher bevorzugt Wasserdampf zunächst ausschließlich über die Treibdüse 24 zugeführt wird, bevor Ventilmittel 23 die zusätzliche Dampfleitung 16 freischalten.

Fig. 8 entspricht nun der zweiten Phase des Heißmilcherzeugungsbetriebsmodus. Die Darstellung entspricht Fig. 3.

In Fig. 9 ist ein Aufschäumbetriebsmodus gezeigt, in welchem Wasserdampf ausschließlich über die Treibdampfleitung 15 und die Treibdüse 24 der Milch zugeführt wird, und zwar in die Kammer 28 hinein. Milch wird über die Milchleitung 17 angesaugt, ebenso wie Luft über die Leitung 16.

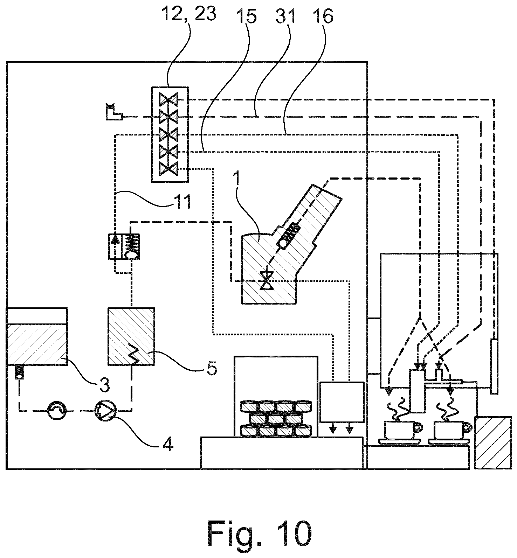

In Fig. 10 ist ein im Vergleich zu Fig. 1 geringfügig abgewandeltes Fluidsystem einer Kaffeemaschine mit Brüheinheit 1 gezeigt. Zur Vermeidung von Wiederholungen wird im Folgenden nur auf die (wesentlichen) Unterschiede zu dem Ausfürhungsbeispiel gemäß Fig. 1 eingegangen. Im Hinblick auf die Gemeinsamkeiten wird auf Fig. 1 mit zugehöriger Figurenbeschreibung verwiesen.

Das Fluidsystem umfasst einen Wassertank 3 aus dem mittels einer Förderpumpe 4 Wasser zu einer Heizeinrichtung 5 gefördert werden kann. Von der Heizeinrichtung 5 gelangt auf über 100°C erhitztes Wasser und/oder Dampf über eine Fluidleitung 11 zu einem Mehrwegeventil 12, welches die im Zusammenhang mit dem Fluidsystem gemäß Fig. 1 beschriebenen Aufgaben erfüllt. Zusätzlich kann mit dem gezeigten Mehrwegeventil 12, welches zu Ventilmitteln 23 gehört, das über die Fluidleitung 11 zuströmende Fluid (Heißwasser und/oder Dampf) aufgeteilt werden auf eine Treibdampfleitung 15, die das Fluid zur Treibdüse fördert, aus der dann Dampf zur Erzeugung eines Unterdrucks ausströmen kann und einer zusätzlichen Dampfleitung 16, die in dem gezeigten Ausführungsbeispiel benachbart zur Treibdüse ausmündet, sodass über die zusätzliche Leitung Wasserdampf an einer von der Auslassöffnung der Treibdüse unterschiedlichen Position der Milch zugeführt werden kann. In dem gezeigten Ausführungsbeispiel entspricht die zusätzliche Dampfleitung nicht einer Luftleitung, über die zum Milchaufschäumen in einem entsprechenden Zustand der Milch Luft zugeführt werden kann. Bei Bedarf kann jedoch auch beispielsweise bei entsprechender Ausgestaltung der Ventilmittel 23, d.h. in diesem Fall des Mehrwegeventils 12 die Leitung 31, die in dem gezeigten Ausführungsbeispiel als Luft- und Reinigungsleitung dient zusätzlich zur Treibdampfleitung mit auf über 100°C erhitztem Wasser oder Wasserdampf versorgt werden, sodass dann der Wasserdampf von dem Mehrwegeventil 12 beispielhaft auf die Leitungen 15 und 31 aufgeteilt wird.

Auch ist eine Aufteilung gleichzeitig auf alle drei Leitungen 15, 16, 31 bei entsprechender Ausgestaltung des Mehrwegeventils 12 realisierbar, so dass dann der Milch Dampf an zwei unterschiedlichen Stellen zugeführt wird. Bei dem Ausführungsbeispiel des Fludisystems gemäß Fig. 10 kann auf das zusätzliche Ventil 30 verzichtet werden.

### Bezugszeichen

- 1: Brüheinheit
- 2: Getränkezubereitungsvorrichtung
- 3: Wassertank
- 4: Förderpumpe
- 5: Heizeinrichtung
- 6: Durchflussmesser
- 7: Überdruckventil
- 8: Drainage (Leitung)
- 9: Tropfschale
- 10: Drainageventil
- 11: Fluidleitung
- 12: Mehrwegeventil
- 14: Heißwasserleitung
- 15: Treibdampfleitung
- 16: Leitung (zusätzliche Dampfleitung), oder Luftleitung, oder Reinigungsleitung)
- 17: Milchleitung
- 18: Drossel
- 19: Aufteilmittel
- 20: Verbindungsleitung
- 21: Tresterkuchen
- 22: Tresterbehälter
- 23: Ventilmittel
- 24: Treibdüse
- 25: Milchbehälter
- 26: Milcherhitzungsmittel
- 27: Auslassöffnung
- 28: Kammer
- 29: Auslassleitung
- 30: Ventil
- 31: Leitung

## Patentansprüche

1. Getränkezubereitungsvorrichtung, insbesondere Kaffeemaschine mit einer Brüheinheit (1) um Auslaugen von Kaffeemehl, mit Mitteln zum Erhitzen von Milch mit Wasserdampf, umfassend eine Heizeinrichtung (5) zum Erhitzen von Wasser zur Bildung von Wasserdampf, mit einer über eine Treibdampfleitung (15) mit dampfförmigen oder zur Dampferzeugung vorgesehenen Fluid versorgbare Treibdüse (24) zum Erzeugen von Unterdruck und dadurch Ansaugen von Milch durch eine Milchleitung (17), wobei Wasserdampf zum Erhitzen der Milch durch eine Auslassöffnung (27) der Treibdüse (24) in die angesaugte Milch einleitbar ist, wobei mindestens eine zusätzliche Dampfleitung (16) vorgesehen ist, durch die Wasserdampf an einer von der Auslassöffnung (27) der Treibdüse (24) unterschiedlichen Position der Milch zuführbar ist,
**dadurch gekennzeichnet,**
**dass** der Milch gleichzeitig Wasserdampf durch die zusätzliche Dampfleitung (16) und durch die Auslassöffnung (27) der Treibdüse (24) zuführbar ist.

2. Getränkezubereitungsvorrichtung nach Anspruch 1,
**dadurch gekennzeichnet,**
**dass** der Heizeinrichtung (5) Aufteilmittel (19), insbesondere Ventilmittel (23) und/oder eine Verzweigungsleitung, zugeordnet sind, mit denen das von der Heizeinrichtung (5) bereitgestellte Fluid aufteilbar ist auf die Treibdampfleitung (15) und die mindestens eine zusätzliche Dampfleitung (16).

3. Getränkezubereitungsvorrichtung nach einem der Ansprüche 1 oder 2,
**dadurch gekennzeichnet,**
**dass** die zusätzliche Dampfleitung (16) in die Milchleitung (17) in Strömungsrichtung der Milch vor der der Auslassöffnung (27) der Treibdüse (24) mündet.

4. Getränkezubereitungsvorrichtung nach Anspruch 3,
**dadurch gekennzeichnet,**
**dass** die zusätzlich Dampfleitung (16) in einem Aufschäumbetriebszustand, in welchem in einer der Auslassöffnung (27) der Treibdüse (24) nachgeordneten Kammer (28) Milch zu Milchschaum aufschäumbar ist, eine, vorzugsweise eine Drossel (18) beinhaltende, Luftleitung (16) ist, durch die die der Kammer (28) zugeleitete Milch mit Luft versorgbar ist.

5. Getränkezubereitungsvorrichtung nach einem der Ansprüche 3 oder 4,
**dadurch gekennzeichnet,**
**dass** die zusätzliche Luftleitung (16) in einem Reinigungsbetriebszustand, in welchem die Milchleitung (17) reinigbar ist eine Reinigungsleitung (16) ist, durch die der Milchleitung (17) Heißwasser und/oder Heißdampf zuführbar ist.

6. Getränkezubereitungsvorrichtung nach einem der vorhergehenden Ansprüche,
**dadurch gekennzeichnet,**
**dass** die zusätzliche Dampfleitung (16) in eine der Auslassöffnung (27) der Treibdüse (24) nachgeordnete Kammer (28) mündet.

7. Getränkezubereitungsvorrichtung nach einem der vorhergehenden Ansprüche,
**dadurch gekennzeichnet,**
**dass** die zusätzliche Dampfleitung (16) in eine Auslassleitung (29) für erhitze Milch mündet, durch die Milch einem Milchauslass zuführbar ist, und dass die Auslassleitung (29) einer der Auslassöffnung (27) der Treibdüse (24) nachgeordneten Kammer (28) nachgeordnet ist.

8. Getränkezubereitungsvorrichtung nach einem der vorhergehenden Ansprüche,
**dadurch gekennzeichnet,**
**dass** die Ventilmittel (23) ein, bevorzugt keramisches, insbesondere elektromotorisch ansteuerbares Mehrwegeventil (12) umfassen, mittels dessen neben der Dampfversorgung oder Wasserversorgung zur Dampferzeugung auch eine Heißwasserversorgung und/oder eine Luftversorgung und/oder eine Reinigungswasserversorgung und/oder eine Reinigungsdampfversorgung von Funktionseinheiten der Getränkezubereitungsvorrichtung (2) steuerbar ist.

9. Getränkezubereitungsvorrichtung nach einem der vorhergehenden Ansprüche,
**dadurch gekennzeichnet,**
**dass** die, bevorzugt einer Verzweigungsleitung und/oder der mindestens einen zusätzlichen Dampfleitung (16) zugeordneten Ventilmittel (23) derart manuell oder automatisch betätigbar sind, dass in einer ersten Phase eines Milcherhitzungsvorgangs Dampf ausschließlich über die er Treibdampfleitung (15) der Milch zugeführt und in einer nachfolgenden zweiten Phase zusätzlich über die mindestens eine zusätzliche Dampfleitung (16) oder dass während der ersten Phase Dampf über die Treibdampfleitung (15) und die mindestens eine zusätzliche Dampfleitung (16) der Milch zugeleitet wird, und dass in der zweiten Phase der Dampfvolumenstrom, der über die zusätzliche Dampfleitung (16) zugeführt wird im Vergleich zu ersten Phase erhöht wird und/oder dass in der zweiten Phase Wasserdampf über mehr zusätzliche Dampfleitungen (16) der Milch zugeführt wird als in der ersten Phase.

10. Getränkezubereitungsvorrichtung (2) nach Anspruch 9,
**dadurch gekennzeichnet,**
**dass** die, bevorzugt eine Verzweigungsleitung und/oder der mindestens einen zusätzlichen Dampfleitung zugeordneten Ventilmittel (23) ein von einem, bevorzugt keramischen, noch weiter bevorzugt elektromotorisch ansteuerbaren Mehrwegeventil 12 separates Ventil 30 ausgebildet sind.

11. Verfahren zum Betreiben einer Getränkezubereitungsvorrichtung (2) nach einem der vorhergehenden Ansprüche, wobei Wasser zum Erzeugen von Dampf erhitzt wird und Wasserdampf durch eine Auslassöffnung (27) einer Treibdüse (24) der Milch zugeleitet und dadurch Milch aus einer Milchleitung (17) angesaugt und erhitzt wird,
**dadurch gekennzeichnet,**
**dass** der Milch gleichzeitig Wasserdampf durch die Auslassöffnung (27) der Treibdüse (24) und zusätzlich an mindestens einer von der Auslassöffnung (27) der Treibdüse (24) unterschiedlichen Position zugeleitet wird.

12. Verfahren nach Anspruch 11,
**dadurch gekennzeichnet,**
**dass** von einer Heizeinrichtung (5) bereitgestelltes, dampfförmiges oder zur Dampferzeugung vorgesehenes Fluid aufgeteilt wird und ein Teil über die Auslassöffnung (27) der Milch zugeleitet wird und ein anderer Teil an der von der Auslassöffnung (27) unterschiedlichen Position.

13. Verfahren nach einem der Ansprüche 11 oder 12,
**dadurch gekennzeichnet,**
**dass** während einer ersten Phase eines Milcherhitzungsvorgangs Dampf ausschließlich über die Auslassöffnung (27) der Treibdüse (24) der Milch zugeführt und in einer nachfolgenden zweiten Phase zusätzlich an der von der Auslassöffnung (27) unterschiedlichen Position, oder dass während der ersten Phase Dampf durch die Auslassöffnung (27) und an der von der Auslassöffnung (27) unterschiedlichen Position der Milch zugeleitet wird und dass in der zweiten Phase der Dampfvolumenstrom, der an der von der Auslassöffnung (27) unterschiedlichen Position der Milch zugeführt wird, im Vergleich zu ersten Phase erhöht wird und/oder dass in der zweiten Phase Wasserdampf über mehr zusätzliche Dampfleitungen (16) der Milch zugeführt wird als in der ersten Phase.

14. Verfahren nach einem der Ansprüche 11 bis 13,
**dadurch gekennzeichnet,**
**dass** in einem Normaltemperaturmodus Dampf der Milch ausschließlich über die Auslassöffnung (27) der Treibdüse (24) zugeführt wird und in einem Hochtemperaturmodus zusätzlich an der von der Auslassöffnung (27) unterschiedlichen Position.

15. Verfahren nach einem der vorhergehenden Ansprüche,
**dadurch gekennzeichnet,**
**dass** die Milch durch das gleichzeitige, zusätzliche Zuleiten von Dampf an der von der Auslassöffnung (27) der Treibdüse (24) unterschiedlichen Position, ohne Luftzufuhr über eine Luftleitung (16), auf eine Temperatur von über 55°C, insbesondere von über 60°C, insbesondere auf eine Temperatur aus einem Temperaturbereich zwischen 58°C und 75°C erhitzt wird.

## Claims

1. A beverage preparation device, in particular a coffee machine having a brewing unit (1) for leaching coffee grounds, having devices for heating milk with steam, comprising a heating device (5) for heating water in order to form steam, having a drive nozzle (24) for generating a negative pressure and thus suctioning milk through a milk tube (17), said drive nozzle (24) being able to be provided via a motive steam tube (15) with vaporous fluid or a fluid intended for generating steam, steam being able to be supplied into the suctioned milk via an outlet opening (27) of the drive tube (24) in order to heat the milk, at least one additional steam tube (16) being provided, through which the steam can be supplied to the milk at a position different to the outlet opening (27) of the drive nozzle (24),
**characterized in that**
steam can be supplied to the milk simultaneously via the additional steam tube (16) and via the outlet opening (27) of the drive nozzle (24).

2. The beverage preparation device according to claim 1,
**characterized in that**
separating means (19), in particular valve devices (23) and/or a branching tube, are allocated to the heating device (5) and separate the fluid provided by the heating device (5) into the motive steam tube (15) and the at least one additional steam tube (16).

3. The beverage preparation device according to claim 1 or 2,
**characterized in that**
the additional steam tube (16) opens into the milk tube (17) upstream of the outlet opening (27) of the drive nozzle (24) in the flow direction of the milk.

4. The beverage preparation device according to claim 3,
**characterized in that**
in a foaming operating condition, in which milk can be foamed to milk foam in a chamber (28) disposed downstream of the outlet opening (27) of the drive nozzle (24), the additional steam tube (16) is an air tube (16), which preferably contains a throttle (18) and via which the milk supplied to the chamber (28) can be provided with air.

5. The beverage preparation device according to claim 3 or 4,
**characterized in that**
in a cleaning operating condition, in which the milk tube (17) can be cleaned, the additional air tube (16) is a cleaning tube (16), through which hot water and/or hot steam can be supplied to the milk tube (17).

6. The beverage preparation device according to any one of the preceding claims,
**characterized in that**
the additional steam tube (16) opens into a chamber (28) disposed downstream of the outlet opening (27) of the drive nozzle (24).

7. The beverage preparation device according to any one of the preceding claims,
**characterized in that**
the additional steam tube (16) opens into an outlet tube (29) for heated milk, via which milk can be supplied to a milk outlet, and **in that** the outlet tube (29) is disposed downstream of a chamber (28) disposed downstream of the outlet opening (27) of the drive nozzle (24).

8. The beverage preparation device according to any one of the preceding claims,
**characterized in that**
the valve devices (23) comprise a, preferably ceramic, multiway valve (12), in particular capable of being driven by an electric motor, by means of which the steam supply or water supply for generating steam as well as a hot water supply and/or an air supply and/or a cleaning water supply and/or a cleaning steam supply for function units of the beverage preparation device (2) can be regulated.

9. The beverage preparation device according to any one of the preceding claims,
**characterized in that**
the valve devices (23), which are preferably allocated to a branching tube and/or the at least one additional steam tube (16), can be actuated manually or automatically in such a manner that, in a first phase of a milk heating process, steam is supplied to the milk exclusively via the motive steam tube (15) and, in a subsequent second phase, steam is additionally supplied to the milk via the at least one additional steam tube (16), or that, during the first phase, steam is supplied to the milk via the motive steam tube (15) and the at least one additional steam tube (16) and that, in the second phase, the steam volume flow, which is supplied via the additional steam tube (16), is increased in comparison to the first phase, and/or that, in the second phase, steam is supplied to the milk via more additional steam tubes (16) than in the first phase.

10. The beverage preparation device (2) according to claim 9,
**characterized in that**
the valve devices (23), which are preferably allocated to a branching tube and/or the at least one additional steam tube, are realized by a valve (30), which is separate from a, preferably ceramic, multiway valve (12), more preferably capable of being driven by an electric motor.

11. A method for operating a beverage preparation device (2) according to any one of the preceding claims, water being heated for generating steam and steam being supplied to the milk via an outlet opening (27) of a drive nozzle (24) and milk thus being suctioned from a milk tube (17) and being heated,
**characterized in that**
steam is supplied to the milk simultaneously via the outlet opening (27) of the drive nozzle (24) and additionally in at least one position different to the outlet opening (27) of the drive nozzle (24).

12. The method according to claim 11,
**characterized in that**
vaporous fluid or fluid intended for generating steam, which is provided by a heating device (5), is separated and a part thereof is supplied to the milk via the outlet opening (27) and a different part thereof is supplied to the position different to the outlet opening (27).

13. The method according to claim 11 or 12,
**characterized in that**
steam is supplied to the milk exclusively via the outlet opening (27) of the drive nozzle (24) during a first phase of a milk heating process and additionally at a position different to the outlet opening (27) in a subsequent second phase, or **in that**, during the first phase, steam is supplied to the milk via the outlet opening (27) and at the position different to the outlet opening (27), and **in that**, in the second phase, the steam volume flow, which is supplied to the milk at the position different to the outlet opening (27), is increased in comparison to the first phase, and/or **in that**, in the second phase, steam is supplied to the milk via more additional steam tubes (16) than in the first phase.

14. The method according to any one of the claims 11 to 13,
**characterized in that**
in a normal temperature mode, steam is supplied to the milk exclusively via the outlet opening (27) of the drive nozzle (24) and additionally at the position different to the outlet opening (27) in a high temperature mode.

15. The method according to any one of the preceding claims,
**characterized in that**
the milk is heated to a temperature of over 55 °C, in particular over 60 °C, in particular to a temperature ranging between 58 °C and 75 °C, by simultaneously and additionally supplying steam at the position different to the outlet opening (27) of the drive nozzle (24), without supplying air via an air tube (16).

## Revendications

1. Dispositif de préparation de boisson, en particulier une machine à café ayant une unité de percolation (1) pour lessiver du café moulu, ayant des dispositifs pour chauffer du lait avec de la vapeur d'eau, comprenant un dispositif de chauffage (5) pour chauffer l'eau afin de former de la vapeur d'eau, ayant une buse d'entraînement (24) pour générer une pression négative et ainsi pour aspirer du lait par un tuyau de lait (17), ladite buse d'entraînement (24) pouvant être pourvu d'un fluide en forme de vapeur ou d'un fluide prévu pour générer de la vapeur au moyen d'un tuyau de vapeur motrice (15), de la vapeur d'eau pouvant être introduite dans le lait aspiré par une ouverture de sortie (27) du tuyau d'entraînement (24) pour chauffer le lait, au moins un tuyau de vapeur (16) additionnel étant prévu, par lequel de la vapeur d'eau peut être fournie au lait dans une position autre que l'ouverture de sortie (27) de la buse d'entraînement (24),
**caractérisé en ce que**
de la vapeur d'eau peut être fournie au lait simultanément par le tuyau de vapeur (16) additionnel et par l'ouverture de sortie (27) de la buse d'entraînement (24).

2. Dispositif de préparation de boisson selon la revendication 1,
**caractérisé en ce que**
des dispositifs de séparation (19), en particulier des dispositifs de soupape (23) et/ou un tuyau de branchement, sont attribués au dispositif de chauffage (5) et séparent le fluide prévu par le dispositif de chauffage (5) en le tuyau de vapeur motrice (15) et en l'au moins un tuyau de vapeur (16) additionnel.

3. Dispositif de préparation de boisson selon la revendication 1 ou 2,
**caractérisé en ce que**
le tuyau de vapeur (16) additionnel s'ouvre dans le tuyau de lait (17) en amont de l'ouverture de sortie (27) de la buse d'entraînement (24) dans le sens d'écoulement du lait.

4. Dispositif de préparation de boisson selon la revendication 3,
**caractérisé en ce qu'**
en un état d'opération moussant, en lequel du lait peut être moussé à une mousse au lait dans la chambre (28) disposée en aval de l'ouverture de sortie (27) de la buse d'entraînement (24), le tuyau de vapeur (16) additionnel est un tuyau d'air (16), qui contient préférablement un piège (18) et par lequel le lait fournie à la chambre (28) peut être alimenté en air.

5. Dispositif de préparation de boisson selon la revendication 3 ou 4,
**caractérisé en ce qu'**
en un état d'opération de nettoyage, en lequel le tuyau de lait (17) peut être nettoyé, le tuyau d'air (16) additionnel est un tuyau de nettoyage (16), par lequel de l'eau chaude et/ou de la vapeur chaude peut être fournie au tuyau de lait (17).

6. Dispositif de préparation de boisson selon l'une quelconque des revendications précédentes,
**caractérisé en ce que**
le tuyau de vapeur (16) additionnel s'ouvre dans une chambre (28) disposée en aval de l'ouverture de sortie (27) de la buse d'entraînement (24).

7. Dispositif de préparation de boisson selon l'une quelconque des revendications précédentes,
**caractérisé en ce que**
le tuyau de vapeur (16) additionnel s'ouvre dans un tuyau de sortie (29) pour le lait chauffé, par lequel le lait peut être fourni à une sortie de lait, et **en ce que** le tuyau de sortie (29) est disposé en aval d'une chambre (28) disposée en aval de l'ouverture de sortie (27) de la buse d'entraînement (24).

8. Dispositif de préparation de boisson selon l'une quelconque des revendications précédentes,
**caractérisé en ce que**
les dispositifs de soupape (23) comprennent une soupape à plusieurs voies (12), préférablement céramique, en particulier capable à être entraînée par un moteur électrique, au moyen de laquelle l'alimentation en vapeur ou l'alimentation en eau pour la génération de la vapeur ainsi qu'une alimentation en eau chaude et/ou une alimentation en air et/ou une alimentation en eau de nettoyage et/ou une alimentation en vapeur de nettoyage des unités de fonction du dispositif de préparation de boisson (2) sont réglables.

9. Dispositif de préparation de boisson selon l'une quelconque des revendications précédentes,
**caractérisé en ce que**
les dispositifs de soupape (23), qui sont attribués préférablement à un tuyau de branchement et/ou à l'au moins un tuyau de vapeur (16) additionnel, peuvent être actionnés manuellement ou automatiquement de telle manière qu'en première phase d'un procédé de chauffage de lait, de la vapeur est fournie au lait seulement par le tuyau de vapeur motrice (15) et, en une deuxième phase subséquente, de la vapeur est fournie au lait en outre par l'au moins un tuyau de vapeur (16) additionnel, ou que, pendant la première phase de la vapeur est fournie au lait par le tuyau de vapeur motrice (15) et par l'au moins un tuyau de vapeur (16) additionnel, et que, en la deuxième phase, l'écoulement de volume de vapeur, qui est fourni par le tuyau de vapeur (16) additionnel, est augmenté en comparaison à la première phase, et/ou que, en la deuxième phase, de la vapeur d'eau est fournie au lait par plus tuyaux de vapeur (16) additionnels qu'en la première phase.

10. Dispositif de préparation de boisson (2) selon la revendication 9,
**caractérisé en ce que**
les dispositifs de soupape (23), qui sont attribués préférablement à un tuyau de branchement et/ou à l'au moins un tuyau de vapeur additionnel, sont réalisés par une soupape (30), qui est séparée d'une soupape à plusieurs voies (12), de préférence céramique, de préférence particulière capable à être entraînée par un moteur électrique.

11. Procédé pour l'opération d'un dispositif de préparation de boisson (2) selon l'une quelconque des revendications précédentes, de l'eau étant chauffée pour générer de la vapeur et de la vapeur d'eau étant fournie au lait par une ouverture de sortie (27) d'une buse d'entraînement (24) et le lait ainsi étant aspiré d'un tuyau de lait et étant chauffé (17),
**caractérisé en ce que**
de la vapeur d'eau est fournie au lait simultanément par l'ouverture de sortie (27) de la buse d'entraînement (24) et de plus dans au moins une position autre que l'ouverture de sortie (27) de la buse d'entraînement (24).

12. Procédé selon la revendication 11,
**caractérisé en ce que**
du fluide en forme de vapeur ou du fluide prévu pour générer de la vapeur, qui est fourni par le dispositif de chauffage (5), est séparé et une partie de celui-ci est fournie au lait par l'ouverture de sortie (27) et une autre partie de celui-ci est fournie dans la position autre que l'ouverture de sortie (27).

13. Procédé selon la revendication 11 ou 12,
**caractérisé en ce que**
pendant une première phase d'un procédé de chauffage de lait, de la vapeur est fournie au lait seulement par l'ouverture de sortie (27) de la buse d'entraînement (24) et de plus dans la position autre que l'ouverture de sortie (27) en une deuxième phase subséquente, ou **en ce que**, pendant la première phase, de la vapeur est fournie au lait par l'ouverture de sortie (27) et dans la position autre que l'ouverture de sortie (27), et **en ce que**, en la deuxième phase, l'écoulement de volume de vapeur, qui est fourni au lait dans la position autre que l'ouverture de sortie (27), est augmenté en comparaison à la première phase, et/ou **en ce que**, en la deuxième phase, de la vapeur d'eau est fournie au lait par plus tuyaux de vapeurs (16) additionnels qu'en la première phase.

14. Procédé selon l'une quelconque des revendications 11 à 13,
**caractérisé en ce qu'**
en un mode de température normale, de la vapeur est fournie au lait seulement par l'ouverture de sortie (27) de la buse d'entraînement (24) et en un mode de température haute, de la vapeur est fournie de plus dans la position autre que l'ouverture de sortie (27).

15. Procédé selon l'une quelconque des revendications précédentes,
**caractérisé en ce que**
le lait est chauffé à une température plus haute que 55 °C, en particulier plus haute que 60 °C, en particulier à une température dans une plage entre 58 °C et 75 °C, par l'alimentation simultanée additionnelle en vapeur dans la position autre que l'ouverture de sortie (27) de la buse d'entraînement (24), sans alimentation en air par un tuyau d'air (16).
